# FASCICULE DE BREVET EUROPEEN

(11) **EP 4 601 912 B1**
(45) Date de publication et mention de la délivrance du brevet: **02.12.2026**
(21) Numéro de dépôt: 23777326.2
(22) Date de dépôt: 06.09.2023
(51) Int. Cl.: B60Q 1/30, B60Q 1/26, F21W 103/35

(54) **ASSEMBLAGE DE SIGNALISATION POUR VÉHICULE AUTOMOBILE À HAYON**
SIGNALBAUGRUPPE FÜR KFZ MIT HECKKLAPPE
SIGNALLING ASSEMBLY FOR HATCHBACK VEHICLES

(30) Priorité: 13.10.2022 FR 2210531
(43) Date de publication de la demande: 20.08.2025
(73) Titulaire: Stellantis Auto SAS, 78300 Poissy (FR)
(72) Inventeur: BOUDAN, Julien, 91210 DRAVEIL (FR); ROYER, Guillaume, 91680 BRUYERES LE CHATEL (FR); PERON, Rodolphe, 95220 HERBLAY SUR SEINE (FR); GOURVENNEC, Thibault, 91210 DRAVEIL (FR)
(74) Mandataire: ESIP
(86) Numéro de dépôt international: PCT/FR2023/051339
(87) Numéro de publication internationale: WO 2024/079397

(56) Documents cités:
- EP-A2- 0 789 184
- EP-B1- 0 544 725
- EP-B1- 1 787 841
- US-A- 5 289 353
- US-A1- 2004 124 659

## Description

La présente invention revendique la priorité de la demande française 2210531 déposée le 13 10.2022.

### Domaine technique de l'invention

L'invention concerne le domaine des blocs optiques de signalisation des véhicules automobiles, en particulier les feux stop agencés en position centrale à l'arrière des véhicules automobiles. L'invention porte en particulier sur un assemblage de signalisation pour véhicule automobile à hayon. L'invention concerne également un hayon de véhicule automobile auquel un tel assemblage de signalisation est fixé, ainsi qu'un véhicule automobile équipé d'un tel hayon. L'invention s'applique, notamment, aux voitures.

### État de la technique antérieure

On sait que les véhicules automobiles actuels sont généralement pourvus d'un troisième feu stop agencé en position centrale au niveau du coffre du véhicule. Pour les véhicules équipés d'un hayon, le troisième feu stop est généralement agencé au niveau de la partie supérieure du hayon sur la face intérieure de la lunette arrière. Les constructeurs doivent donc prévoir un moyen d'agencer à cet endroit le troisième feu stop. Or, cette contrainte impose généralement de prévoir des moyens pour fixer le feu au hayon qui, généralement, sont indépendants des moyens utilisés pour fixer des garnitures qui, pour des raisons d'esthétique, sont utilisées pour couvrir le cadre du hayon. Ainsi, des moyens de fixation des garnitures et des moyens de fixation du troisième feu stop doivent être prévus, ce qui complique l'assemblage de ces éléments sur les lignes de montage des véhicules, non seulement du fait de l'indépendance du feu et des garnitures mais également du point de vue des éléments de fixation indépendants qui doivent être utilisés. Cela a pour conséquence d'augmenter les coûts de fabrication des véhicules et le temps nécessaire à leur production. Le document EP0544725 divulgue un feu arrière pour véhicule à moteur.

### Résumé de l'invention

L'invention vise à pallier ces inconvénients. L'invention vise en particulier à fournir une solution pour permettre un montage aisé et à moindre coût d'un troisième feu stop sur un hayon d'un véhicule automobile.

Pour atteindre ce but, l'invention concerne, selon un premier aspect, un assemblage de signalisation pour véhicule automobile à hayon, ledit assemblage comprenant une garniture destinée à être fixée sur le cadre du hayon et un feu stop sensiblement plat s'emboîtant dans ladite garniture, ladite garniture étant pourvue de perforations traversantes au moyen desquelles elle peut être fixée au hayon avec seulement deux vis et, sur sa face interne, de taquets de positionnement, de premiers éléments de préhension et de seconds éléments de préhension, ledit feu comprenant des pattes de fixation pourvues de logements dans lesquels s'engagent les taquets de positionnement et de surfaces d'appui coopérant avec les premiers et les seconds éléments de préhension afin de solidariser le feu avec la garniture, les perforations de la garniture coïncidant avec des trous traversants percés dans les pattes de fixation du feu.

Selon une variante, les taquets de positionnement peuvent être au nombre de deux.

Selon une autre variante, les taquets de positionnement peuvent avoir un profil en H.

Selon encore une autre variante, les premiers éléments de préhension et les seconds éléments de préhension peuvent être au nombre de deux.

Selon encore une autre variante, les premiers éléments de préhension peuvent être formés en vis-à-vis des seconds éléments de préhension.

Selon encore une autre variante, la garniture peut comprendre trois arrêtoirs formés entre les taquets de positionnement sur lesquels repose la partie inférieure du feu.

Selon un deuxième aspect, l'invention concerne un hayon de véhicule automobile auquel est fixé un assemblage de signalisation tel que décrit ci-dessus.

Selon un troisième aspect, l'invention concerne un véhicule automobile comprenant un hayon tel que décrit ci-dessus.

### Brève description des figures

D'autres caractéristiques et avantages de l'invention apparaîtront à l'examen de la description détaillée ci-après, et des dessins annexés, sur lesquels :
[Fig. 1] est une vue en perspective d'un hayon de véhicule automobile selon l'invention ;
[Fig. 2] est une vue en perspective éclatée d'un assemblage de signalisation selon l'invention ;
[Fig. 3] est une vue en perspective d'un assemblage de signalisation selon l'invention ;
[Fig. 4] est une vue en perspective d'une garniture d'un assemblage de signalisation selon l'invention ;
[Fig. 5] est une vue de détail en perspective d'une garniture d'un assemblage de signalisation selon l'invention ;
[Fig. 6] est une vue de détail en perspective d'un assemblage de signalisation selon l'invention ;
[Fig. 7] est une vue en perspective d'une garniture d'un assemblage de signalisation selon l'invention ;
[Fig. 8] est une vue de détail en perspective d'une garniture d'un assemblage de signalisation selon l'invention ;
[Fig. 9] est une vue de détail en perspective d'une garniture d'un assemblage de signalisation selon l'invention ; et
[Fig. 10] est une vue en coupe d'une partie d'un assemblage de signalisation selon l'invention.

### Description détaillée de l'invention

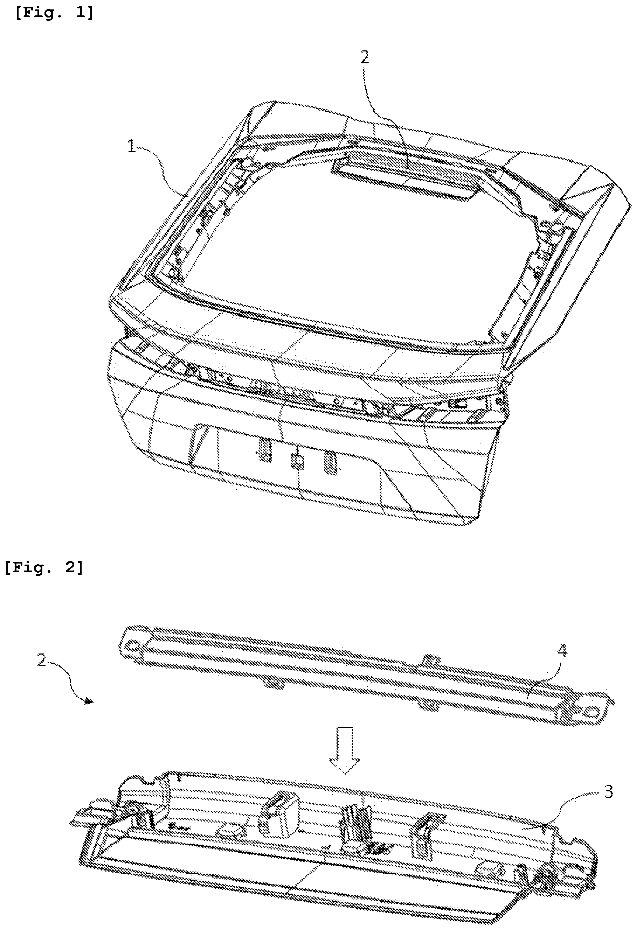

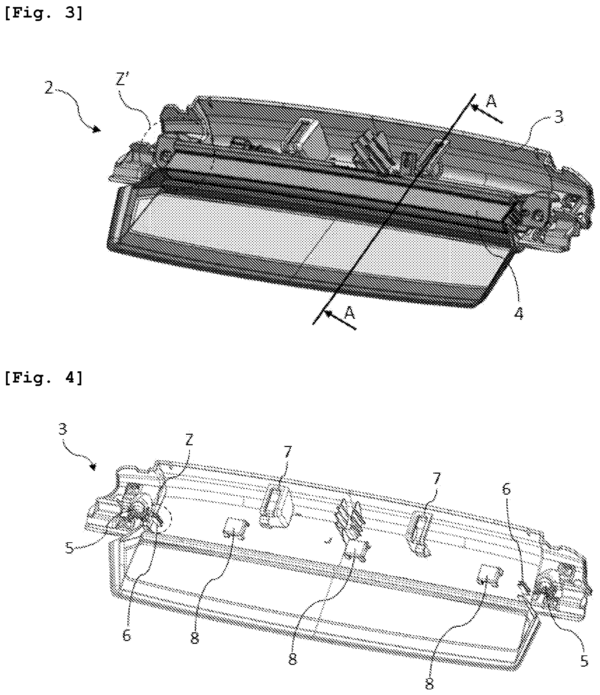

La figure 1 illustre un hayon 1 de véhicule automobile selon l'invention auquel est fixé un assemblage de signalisation 2 pour véhicule automobile à hayon selon l'invention. Comme on le voit sur la figure 2, l'assemblage de signalisation 2 pour véhicule automobile à hayon selon l'invention comprend une garniture 3 destinée à être fixée sur le cadre du hayon 1 du véhicule et un feu stop 4 sensiblement plat qui s'emboite dans la garniture 3 en opérant un mouvement de translation, comme indiqué par la flèche. Sur la figure 3 est représenté l'assemblage de signalisation 2 pour véhicule automobile à hayon selon l'invention tel qu'il se présente lorsque le feu 4 est emboîté dans la garniture 3.

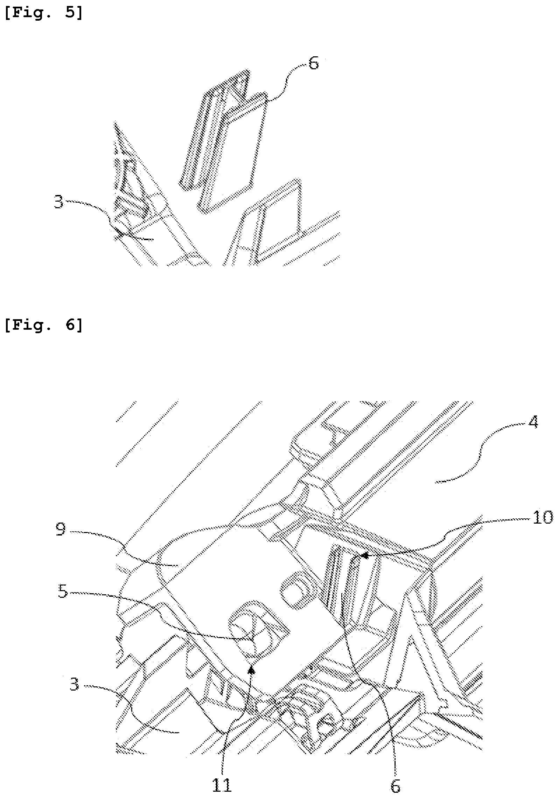

La figure 4 représente la garniture 3 de l'assemblage de signalisation 2 pour véhicule automobile à hayon selon l'invention. Celle-ci est pourvue de chaque côté de perforations traversantes 5 au moyen desquelles la garniture peut être fixée sur le cadre du hayon 1 au moyen de seulement deux vis. La garniture 3 comprend en outre, de chaque côté, deux taquets de positionnements 6 qui s'élèvent verticalement depuis la base de la garniture 3. Comme on le voit mieux sur la figure 5, qui représente une vue de détail de la zone Z identifiée sur la figure 4, les taquets de positionnement 6 ont préférentiellement un profil en H. En outre, la garniture 3 est pourvue de premiers éléments de préhension 7 qui, comme on le verra ci-dessous, servent à solidariser le feu 4 avec la garniture 3. Elle comprend en outre, formés entre les deux taquets de positionnement 6, trois arrêtoirs 8 destinés à accueillir la partie inférieure du feu 4, préférentiellement surmontés d'amortisseurs en élastomère pour atténuer les vibrations du feu 4.

Sur la figure 6 est illustrée une vue de détail de la zone Z' identifiée sur la figure 3. Comme on le voit, le feu 4 comprend des pattes de fixation 9 qui sont pourvues de logements 10 borgnes dans lesquels s'engagent avantageusement les taquets de positionnement 6 de la garniture 3 lorsque le feu 4 est emboité dans la garniture 3. On facilite ainsi l'emboitage du feu 4 dans la garniture 3 car, grâce aux deux taquets de positionnement 6 et aux logements 10, celui-ci ne peut être réalisé que dans une unique position du feu 4 vis-à-vis de la garniture 3. En outre, lorsque le feu 4 est emboité dans la garniture 3, des trous traversants 11 percés dans les pattes de fixation 9 coïncident avec les perforations 5 de la garniture 3. Ainsi, les vis utilisées pour fixer la garniture 3 au hayon 1 servent aussi à y fixer le feu 4. On minimise ainsi avantageusement le nombre de vis qui doivent être utilisées pour fixer la garniture 3 et le feu 4 au hayon 2.

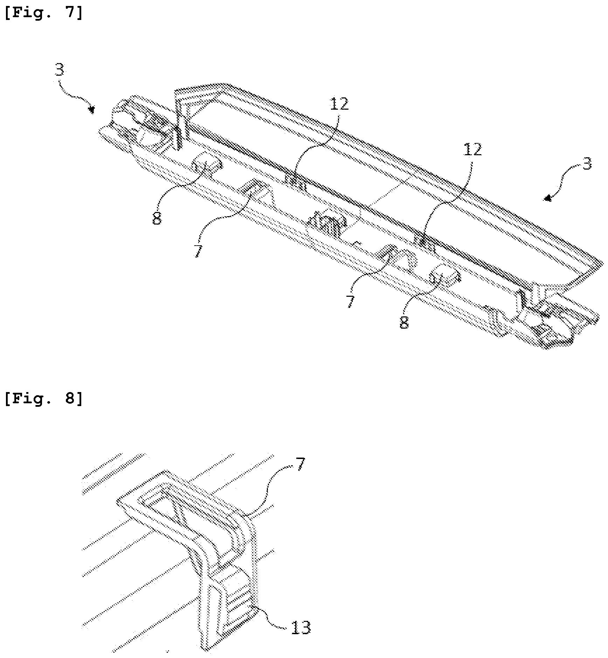

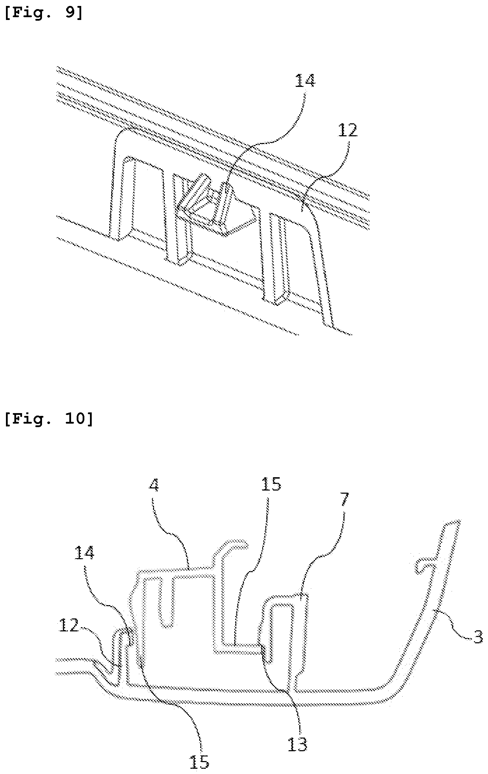

On voit sur la figure 7, qui représente une vue de la garniture 3 dans l'autre sens, que celle-ci comprend des seconds éléments de préhension 12, préférentiellement formés en vis-à-vis des premiers éléments de préhension 7. Une vue de détail des premiers éléments de préhension 7 est illustrée sur la figure 8, tandis qu'une vue de détail des seconds éléments de préhension 12 est illustrée sur la figure 9. Les premiers éléments de préhension 7 comprennent une butée 13 et les seconds éléments de préhension 12 comprennent une butée 14.

On a représenté sur la figure 10 une vue d'une partie de l'assemblage de signalisation 2 selon la coupe A-A indiquée sur la figure 3, vue dans laquelle les hachures sont omises pour plus de clarté. Comme on le voit, des surfaces d'appui 15 situées de chaque côté du feu 4 coopèrent, d'un côté, avec les premiers éléments de préhension 7 de la garniture 3, en s'appuyant contre les butées 13, et, de l'autre côté, avec les seconds éléments de préhension 12, en s'appuyant contre les butées 14. De ce fait, lorsque le feu 4 est emboité dans la garniture 3, les butées 13 des premiers éléments de préhension 7 et les butées 14 des seconds éléments de préhension 12 retiennent avantageusement le feu 4 emboité dans la garniture 3. L'assemblage de signalisation 2 selon l'invention peut ainsi avantageusement être transporté sans risque que le feu 4 ne se désolidarise de la garniture 3.

Ainsi, grâce à l'invention, une solution est fournie pour permettre un montage aisé et à moindre coût d'un troisième feu stop sur un hayon d'un véhicule automobile.

## Revendications

1. Assemblage de signalisation (2) pour véhicule automobile à hayon (1), ledit assemblage comprenant une garniture (3) destinée à être fixée sur le cadre du hayon (1) et un feu stop (4) sensiblement plat s'emboîtant dans ladite garniture, ladite garniture étant pourvue de perforations (5) traversantes au moyen desquelles elle peut être fixée au hayon avec seulement deux vis et, sur sa face interne, de taquets de positionnement (6), de premiers éléments de préhension (7) et de seconds éléments de préhension (12), ledit feu (4) comprenant des logements (10) dans lesquels s'engagent les taquets de positionnement (6) et de surfaces d'appui (15) coopérant avec les premiers (7) et les seconds éléments de préhension (12) afin de solidariser le feu (4) avec la garniture (3), **caractérisé en ce que** ledit feu (4) comprend des pattes de fixation (9) pourvues desdits logements (10) et **en ce que** les perforations (5) de la garniture coïncident avec des trous (11) traversants percés dans les pattes de fixation (9) du feu (4).

2. Assemblage (2) selon la revendication 1, **caractérisé en ce que** les taquets de positionnement (6) sont au nombre de deux.

3. Assemblage (2) selon l'une des revendications précédentes, **caractérisé en ce que** les taquets de positionnement (6) ont un profil en H.

4. Assemblage (2) selon l'une des revendications précédentes, **caractérisé en ce que** les premiers éléments de préhension (7) et les seconds éléments de préhension (12) sont au nombre de deux.

5. Assemblage (2) selon l'une des revendications précédentes, **caractérisé en ce que** les premiers éléments de préhension (7) sont formés en vis-à-vis des seconds éléments de préhension (12).

6. Assemblage (2) selon l'une des revendications précédentes, **caractérisé en ce que** la garniture (3) comprend trois arrêtoirs (8) formés entre les taquets de positionnement (6) sur lesquels repose la partie inférieure du feu (4).

7. Hayon (1) de véhicule automobile, **caractérisé en ce qu'**un assemblage de signalisation (2) selon l'une des revendications précédentes y est fixé.

8. Véhicule automobile, **caractérisé en ce qu'**il comprend un hayon (1) selon la revendication 7.

## Patentansprüche

1. Anordnung (2) für ein Kraftfahrzeug mit Heckklappe (1), wobei die Baugruppe eine Dichtung (3) zur Befestigung am Heckklappenrahmen (1) und eine im Wesentlichen flache Bremsleuchte (4) umfasst, die in die Dichtung passt, wobei die Dichtung mit durchgehenden Perforationen (5) versehen ist, durch die sie mit nur zwei Schrauben an der Heckklappe befestigt werden kann, und an ihrer Innenseite Positioniernasen (6), erste Greifelemente (7) und zweite Greifelemente (12) aufweist, wobei die Leuchte (4) Aufnahmen umfasst (10), in die die Positioniernasen (6) und Auflageflächen (15) eingreifen, die mit den ersten (7) und den zweiten Greifelementen (12) zusammenwirken, um das Feuer (4) mit der Auskleidung (3) zu verbinden, **dadurch gekennzeichnet, dass** das Feuer (4) Befestigungslaschen (9) aufweist, die mit den Aufnahmen (10) versehen sind, und dass die Perforationen (5) der Auskleidung mit durchgehenden Löchern (11) zusammenfallen, die in die Befestigungslaschen (9) des Feuers (4) gebohrt sind.

2. Anordnung (2) nach Anspruch 1, **dadurch gekennzeichnet, dass** zwei Positioniernasen (6) vorhanden sind.

3. Anordnung (2) nach einem der vorhergehenden Ansprüche, **dadurch gekennzeichnet, dass** die Positioniernasen (6) ein H-Profil aufweisen.

4. Anordnung (2) nach einem der vorhergehenden Ansprüche, **dadurch gekennzeichnet, dass** die Anzahl der ersten Greifelemente (7) und der zweiten Greifelemente (12) zwei ist.

5. Anordnung (2) nach einem der vorhergehenden Ansprüche, **dadurch gekennzeichnet, dass** die ersten Greifelemente (7) gegenüber den zweiten Greifelementen (12) ausgebildet sind.

6. Anordnung (2) nach einem der vorhergehenden Ansprüche, **dadurch gekennzeichnet, dass** der Einsatz (3) drei Anschläge (8) umfasst, die zwischen den Positioniernasen (6) ausgebildet sind, auf denen der untere Teil der Leuchte (4) ruht.

7. Heckklappe (1) eines Kraftfahrzeuges, **dadurch gekennzeichnet, dass** an ihr eine Signalanordnung (2) nach einem der vorhergehenden Ansprüche befestigt ist.

8. Kraftfahrzeug, **dadurch gekennzeichnet, dass** es eine Heckklappe (1) nach Anspruch 7 umfasst.

## Claims

1. Signalling assembly (2) for a tailgate motor vehicle (1), said assembly comprising a lining (3) intended to be fixed to the frame of the tailgate (1) and a substantially flats stop lamp (4) fitting into said lining, said lining being provided with through perforations (5) by means of which it can be fixed to the tailgate with only two screws and, on its inner face, with positioning lugs (6), first gripping items (7) and second gripping items (12), said lamp (4) comprising housings (10) in which the positioning lugs (6) and bearing surfaces (15) engage, cooperating with the first (7) and second gripping items (12) in order to secure the lamp (4) to the lining (3) **characterised in that** said lamp (4) comprises fixing lugs (9) provided with said housings (10) and **in that** the perforations (5) of the lining coincide with through holes (11) pierced in the fixing lugs (9) of the lamp (4).

2. Assembly (2) according to claim 1, wherein the positioning cleats (6) are in quantity of two.

3. Assembly (2) according to one of the previous claims, **characterised in that** the positioning cleats (6) have an H-shaped profile .

4. Assembly (2) according to one of the previous claims, **characterised in that** the first gripping items (7) and the second gripping items (12) are in quantity of two.

5. Assembly (2) according to one of the previous claims, wherein the first gripping items (7) are formed opposite the second gripping items (12).

6. Assembly (2) according to one of the previous claims, **characterised in that** the lining (3) comprises three stops (8) formed between the positioning cleats (6) on which the lower part of the lamp (4) rests.

7. Motor vehicle tailgate (1), wherein a signalling assembly (2) according to one of the previous claims is fixed thereto.

8. Motor vehicle, **characterised in that** it comprises a tailgate (1) according to claim 7.
